# FASCICULE DE BREVET EUROPEEN

(11) **EP 2 856 903 B1**
(45) Date de publication et mention de la délivrance du brevet: **05.07.2017**
(21) Numéro de dépôt: 14183503.3
(22) Date de dépôt: 04.09.2014
(51) Int. Cl.: A44C 5/00, G04B 37/22, G04B 19/12, G04B 19/10, B44C 1/26

(54) **Elément céramique incrusté d'au moins un décor en céramique**
Keramikelement mit mindestens einem Keramikdekoreinsatz
Ceramic element encrusted with at least one ceramic decoration

(30) Priorité: 01.10.2013 EP 13186826
(43) Date de publication de la demande: 08.04.2015
(73) Titulaire: Montres Rado S.A., 2543 Lengnau (CH)
(72) Inventeur: Verdon, Christian, CH-1356 Les Clées (CH)
(74) Mandataire: Goulette, Ludivine

(56) Documents cités:
- EP-A- 2 138 323
- EP-A1- 2 515 185
- EP-A1- 2 615 507
- EP-A1- 2 628 607
- EP-B1- 1 577 416
- FR-A- 2 234 144

## Description

### Domaine de l'invention

L'invention se rapporte à un élément céramique incrusté d'au moins un décor en une autre céramique et plus précisément un tel élément destiné à être monté notamment dans une pièce d'horlogerie.

### Arrière-plan de l'invention

Il est connu de former des lunettes de montre au moins partiellement en saphir synthétique pour montrer, par transparence, un dépôt effectué dans un creux sous la lunette formant par exemple une graduation ou une dénomination commerciale. Cette configuration à l'avantage de protéger le dépôt de toute dégradation mécanique par recouvrement total de la partie en saphir. Cependant, cette configuration peut rendre difficile la lecture du décor par la transmission altérée de la coloration du dépôt mais également par le manque de différence de la teinte du saphir par rapport à celle du dépôt.

Le document EP 2 138 323 divulgue une lunette en céramique comportant des indices incrustés en alliage métallique amorphe.

### Résumé de l'invention

Le but de la présente invention est de pallier tout ou partie les inconvénients cités précédemment en proposant un élément totalement en céramique c'est-à-dire dont le corps principal et les incrustations comportent une résistance mécanique homogène.

A cet effet, l'invention se rapporte à un procédé de fabrication d'un élément céramique incrusté d'une pièce d'horlogerie comportant les étapes suivantes :
a) former un corps en céramique ;
b) graver au moins un évidement dans une face du corps en céramique, chaque au moins un évidement formant l'empreinte d'un décor;
c) modifier l'état de surface du fond dudit au moins un évidement afin d'augmenter sa surface de contact ;
d) déposer, par projection thermique, une deuxième céramique par-dessus ledit au moins un évidement afin de remplir totalement ledit au moins un évidement ;
e) aplanir ladite deuxième céramique afin de n'en laisser que dans le creux dudit au moins un évidement.

On réalise immédiatement que la variété des teintes du décor et/ou du corps n'est plus limitée par la transparence de cette dernière tout en obtenant une résistance à l'usure homogène et très élevée. A titre d'exemple, il est ainsi possible d'obtenir un rendu visuel très contrasté avec le corps en une première céramique de couleur sombre et des décors en une (ou plusieurs) autre(s) céramique(s) d'une (ou plusieurs) couleur(s) claire(s).

Conformément à d'autres caractéristiques avantageuses de l'invention :
- l'étape a) est réalisée par frittage ;
- le corps en céramique comporte un carbure, un oxyde ou un nitrure de matériaux comme le titane, le silicium, l'aluminium ou le zirconium ;
- le corps en céramique est un cermet ;
- le corps en céramique est un corindon synthétique tel qu'un saphir monocristallin ou un rubis monocristallin ;
- l'étape b) est réalisée par laser ;
- chaque au moins un évidement comporte une profondeur comprise entre 80 *µ*m et 500 *µ*m afin d'améliorer la force d'accrochage ;
- l'étape c) est réalisée par laser ;
- l'étape c) forme des cavités dans ledit fond dudit au moins un évidement ;
- les cavités forment des rainures courant sur ledit fond dudit au moins un évidement ;
- lesdites rainures courant sur ledit fond dudit au moins un évidement sont sécantes ;
- les cavités ont des profondeurs qui sont inférieures au cinquième de la profondeur dudit au moins un évidement ;
- l'étape c) est réalisée par sablage ou gravage chimique ;
- la deuxième céramique comporte un carbure, un oxyde ou un nitrure de matériaux comme le titane, le silicium, l'aluminium ou le zirconium ;
- la projection thermique est du type à plasma ;
- le procédé comporte, avant l'étape d), l'étape f) destinée à former une couche de liaison au niveau du fond dudit au moins un évidement afin d'assurer un meilleur accrochage ou modifier l'apparence esthétique de la deuxième céramique ;
- le procédé, après l'étape e), comporte les étapes b') destinée à graver au moins un deuxième évidement dans une face de la deuxième céramique, c') destinée à modifier l'état de surface du fond dudit au moins un deuxième évidement afin d'augmenter sa surface de contact, d') destinée à déposer, par projection thermique, une troisième céramique par-dessus ledit au moins un deuxième évidement afin de remplir totalement ledit au moins un deuxième évidement et e') destinée à aplanir ladite troisième céramique afin de n'en laisser que dans le creux dudit au moins un deuxième évidement.

De plus, l'invention se rapporte à une partie de l'habillage d'une pièce d'horlogerie, à une partie du mouvement d'une pièce d'horlogerie ou plus généralement à une pièce d'horlogerie caractérisée en ce qu'il comporte au moins un élément en céramique incrusté par un décor formé par au moins une deuxième céramique conforme à l'une des variantes précédentes.

De manière avantageuse, on comprend donc que l'élément céramique peut notamment former indifféremment tout ou partie d'un boîtier, d'un bracelet, d'une lunette, d'un cadran, d'une glace, d'un poussoir, d'une couronne, d'une carrure, d'une corne, d'un réhaut, d'un fond de boîtier, d'une aiguille, d'un maillon, d'un fermoir, d'un décor, d'une applique, d'un spiral, d'une cheville, d'un balancier, d'un axe, d'un plateau, d'une ancre, d'une tige, d'une baguette, d'une fourchette, d'une palette, d'un dard, d'un mobile, d'une roue, d'un arbre, d'un pignon, d'un pont, d'une platine, d'une masse oscillante, d'une tige de remontoir, d'un palier ou d'un coussinet d'une montre.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'une pièce d'horlogerie selon l'invention ;
- les figures 2 à 4 sont des étapes successives du procédé de fabrication selon l'invention ;
- la figure 5 est une vue partielle d'un élément obtenu selon l'invention ;
- la figure 6 est un schéma fonctionnel du procédé selon l'invention.

### Description détaillée des modes de réalisation préférés

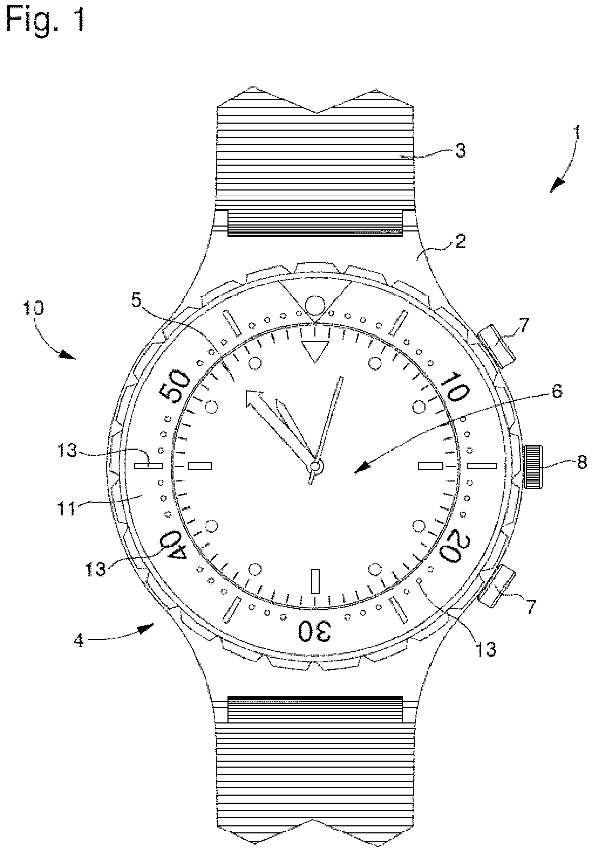

Dans l'exemple illustré à la figure 1, on peut voir une pièce d'horlogerie généralement annotée 1 comportant au moins un élément 10 incrusté. Chaque élément 10 incrusté est destiné à former une pièce résistante à l'usure comportant au moins un décor 13 également en céramique dont la qualité visuelle est améliorée notamment en termes de contraste et dont la résistance à l'usure est homogène et très élevée.

L'élément 10 incrusté selon l'invention peut notamment former indifféremment tout ou partie de l'habillage de la pièce d'horlogerie 1. Ainsi, il pourrait former tout ou partie d'un boîtier 2, d'un bracelet 3, d'une lunette 4, d'un cadran 5, d'une glace 6, d'un poussoir 7 et/ou d'une couronne 8. Dans l'exemple illustré ci-après, l'explication de l'invention sera donnée à partir d'un anneau 10 comportant des décors 13 incrustés formant les graduations d'une lunette 4. Il est également possible de former des éléments 10 incrustés appartenant à un mouvement horloger comme, par exemple, un pont, une platine, un spiral, une cheville, un balancier, un axe, un plateau, une ancre, une tige, une baguette, une fourchette, une palette, un dard, un mobile, une roue, un arbre, un pignon, une tige de remontoir, un palier, un coussinet et/ou une masse oscillante. A titre d'exemple, ledit au moins un des décors 13 peut former tout ou partie d'un palier comme, par exemple, le coussinet.

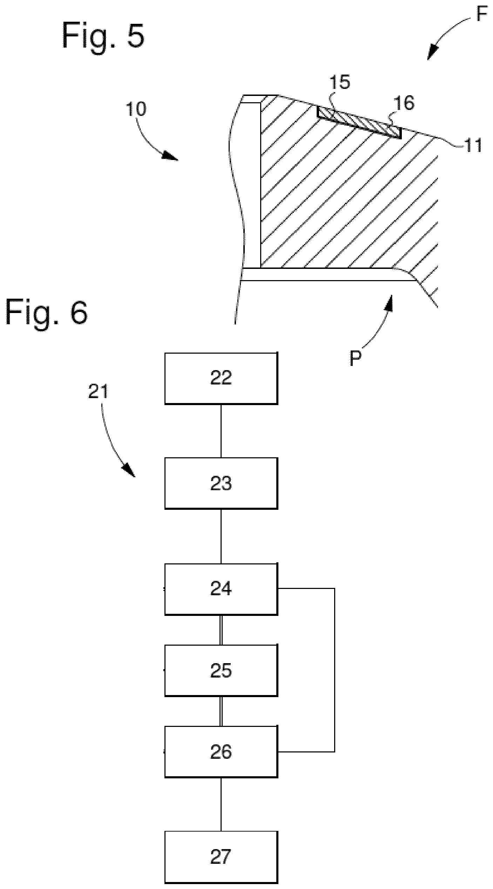

Comme illustré aux figures 1 et 5, l'élément céramique incrusté 10 comporte un corps 11 comportant au moins un évidement 12 formant l'empreinte d'un décor 13. A la figure 1, on peut voir que chaque décor 13 peut, avantageusement selon l'invention, être de forme quelconque, comme, par exemple, une figure géométrique ou un caractère alphanumérique. Selon l'invention, chaque évidement 12 est entièrement rempli par au moins une deuxième céramique 16. Cette configuration permet de protéger chaque décor 13 dans le corps 11.

Avantageusement selon l'invention, ladite au moins une deuxième céramique 16 est obtenue à partir d'un carbure, d'un oxyde ou d'un nitrure de matériaux comme le titane, le silicium, l'aluminium ou le zirconium permettant d'obtenir une grande variété de matériaux de dureté identique ou similaire à celui du corps 11.

De fait, ladite au moins une deuxième céramique 16 et le corps 11 peuvent être de même nature, c'est-à-dire un même type de céramique, mais comporter une différence de composition, comme par exemple un dopage, contrastant la couleur de chacune des céramiques.

Selon l'invention, le corps 11 peut être obtenu à partir d'une grande variété de matériaux. Préférentiellement, le corps 11 est en céramique. Il peut ainsi être formé par un cermet qui est un matériau formé par un mélange de céramique et de métal ou par encore un corindon synthétique tel qu'un saphir monocristallin ou un rubis monocristallin. Plus généralement, on peut utiliser, à titre d'exemple, un carbure, un oxyde ou un nitrure de matériaux comme le titane, le silicium, l'aluminium ou le zirconium sous forme polycristalline ou monocristalline pour former tout ou partie du corps 11. Le corps 11 peut ainsi, par exemple, être une glace de montre en saphir monocristallin comportant au moins un décor en une deuxième céramique représentant une marque commerciale ou un affichage comme un tour d'heure.

Afin d'améliorer l'accrochage du décor 13 dans le corps 11, l'évidement 12 comporte une profondeur comprise entre 80 *µ*m et 700 *µ*m et, de manière préférée, sensiblement égale à 400 *µ*m. On comprend donc que, de manière préférée, l'évidement 12 ne débouche pas sur la face opposée P.

De plus, pour des raisons d'adhérence de ladite au moins une deuxième céramique 16, préférentiellement, chaque fond dudit au moins un évidement 12 comporte un état de surface modifié afin d'augmenter sa surface de contact. Comme expliqué ci-après, l'augmentation de surface peut notamment être obtenue en formant des cavités dans ledit fond dudit au moins un évidement ou en augmentant localement sa rugosité.

Enfin, comme visible à la figure 5, optionnellement, une couche de liaison 15, comprise entre 2 *µ*m et 150 *µ*m, peut être formée entre le fond dudit au moins un évidement et ladite au moins une deuxième céramique 16 afin d'assurer un meilleur accrochage du décor 13. A titre d'exemple, la couche de liaison 15 peut être formée à partir de technique d'impression afin de recouvrir de manière continue le fond dudit au moins un évidement. Une telle technique peut notamment consister en une tampographie, une pulvérisation ou un dépôt par rouleau ou pinceau.

Une telle couche 15 peut notamment comporter un métal tel que le chrome ou le titane et/ou un alliage métallique et/ou un nitrure métallique tel que le nitrure de chrome, et/ou un carbure métallique et/ou un titanate et/ou un zirconate et/ou un aluminate. Lors du développement, l'utilisation d'une telle couche 15 ne s'est jamais révélée nécessaire pour les céramiques testées car les tests d'adhésion sont déjà satisfaisants sans une telle couche 15.

Ainsi, selon l'invention, le rendu visuel de chaque décor 13 est obtenu par la teinte de ladite au moins une deuxième céramique 16. Par conséquent, le matériau utilisé pour ladite au moins une deuxième céramique 16 sera préférentiellement guidé par sa teinte ou plus globalement son rendu esthétique. A titre d'exemple, il est ainsi possible d'obtenir un rendu visuel très contrasté avec le corps 11 de couleur sombre et des décors 13 d'une (ou plusieurs) couleur(s) claire(s), le tout étant en céramique.

De fait, la couche optionnelle de liaison 15 peut également être utilisée pour sa couleur. En effet, sa couleur peut être sélectionnée ou modifiée afin de modifier l'aspect de ladite au moins une deuxième céramique 16. En effet, l'épaisseur de ladite au moins une deuxième céramique 16 déposée peut, selon l'application, rendre cette dernière sensiblement translucide. Par conséquent, une couche optionnelle de liaison 15 peut être utilisée afin que sa teinte soit perceptible au travers de ladite au moins une deuxième céramique 16. Ainsi, à titre d'exemple, un pigment de couleur ou un matériau sélectionné pourrait être choisi pour la couche optionnelle de liaison 15 pour modifier l'apparence sensiblement translucide de ladite au moins une deuxième céramique 16.

On comprend que les décors 13 peuvent être formés avec le même matériau pour offrir un aspect homogène ou avec plusieurs matériaux différents pour, par exemple, donner une teinte différente entre deux décors 13 comme une première teinte pour les index et une autre teinte pour les caractères alphanumériques dans le cas de la figure 1.

Il est également envisageable, afin d'uniformiser les teintes, de former des décors 13 du même matériau que celui qui entoure le corps 11. On pourrait ainsi, dans un exemple de réalisation de la figure 1, avoir des décors 13 de lunette 4 du même matériau que le boîtier 2, le bracelet 3, le reste de la lunette 4, le cadran 5, les poussoirs 7, la couronne 8 mais également une carrure, une corne, un réhaut, un fond de boîtier, une aiguille, un maillon, un fermoir, un décor et/ou une applique.

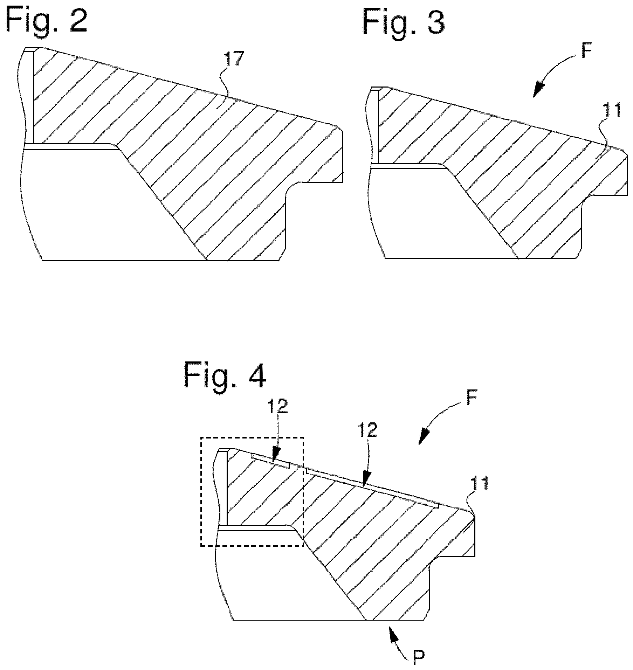

Le procédé de fabrication 21 d'un élément 10 incrusté va maintenant être expliqué à partir des figures 2 à 6 avec l'exemple d'un corps 11 en céramique.

Dans une première étape 22 illustrée à la figure 6, le procédé 21 consiste à former le corps 11 comme, par exemple, en zircone ou en alumine. Comme le montre partiellement le passage de la figure 2 à la figure 3, le corps final 11 de l'étape 22 est obtenu préférentiellement par frittage, c'est-à-dire à partir d'un corps vert 17 préformé par exemple à l'aide d'un processus d'injection et/ou de pressage. A la fin de l'étape 22, le corps 11 visible à la figure 3 comporte ses dimensions finales.

Bien entendu, l'étape 22 peut être obtenue autrement que par un frittage. Ainsi, par exemple, lorsque le corps 11 est formé à base d'une céramique monocristalline comme un corindon synthétique, le corps 11 utilisera une autre technique. A titre d'exemple, après la formation d'une boule en céramique monocristalline, un tronçonnage de la boule puis un usinage dans la plaquette tronçonnée de la forme du corps pourraient être réalisés. Plus généralement, des étapes comme un usinage et/ou un rodage et/ou un polissage peuvent être effectuées.

Comme illustré à la figure 6, le procédé 21 comporte une deuxième étape 23 destinée à graver au moins un évidement 12 borgne dans une face F du corps 11 en céramique, les évidements 12 formant l'empreinte des futurs décors 13 comme visible à la figure 4. Préférentiellement, chaque évidement 12 comporte une profondeur comprise entre 80 *µ*m et 700 *µ*m. L'étape 23 est préférentiellement obtenue par un rayonnement destructif au moyen d'un laser permettant d'obtenir une bonne précision des gravures.

Dans l'exemple de la figure 3, la face F est sensiblement rectiligne et s'étend annulairement. On comprend aisément que la face F peut être de géométrie différente sans que le procédé en soit rendu plus difficile à mettre en oeuvre. Ainsi, à titre d'exemple, il est parfaitement possible que la face F soit partiellement ou totalement bombée et s'étende en translation ou en rotation pour former, par exemple, une face F, partiellement ou totalement, sphérique, toroïdale ou cylindrique.

Comme illustré à la figure 6, le procédé 21 se poursuit selon une troisième étape 24 destinée à modifier l'état de surface du fond dudit au moins un évidement 12 afin d'augmenter sa surface de contact. Préférentiellement, l'étape 24 forme des cavités dans le fond dudit au moins un évidement ou se limite à augmenter localement sa rugosité.

Les cavités ou la rugosité peuvent avoir des profondeurs qui ne sont, de manière préférée, pas supérieure au cinquième de la profondeur des évidements 12 afin d'assurer une augmentation de surface de contact. L'étape 24 est préférentiellement obtenue par un rayonnement destructif au moyen d'un laser, par un sablage ou par un gravage chimique.

A titre d'exemple, une expérimentation a été réalisée à partir d'évidements 12 de 400 *µ*m de profondeur. Les cavités ont été réalisées par rayonnement destructif en formant une première série de rainures sensiblement rectilignes et parallèles qui se croise avec une deuxième série de rainures sensiblement rectilignes et parallèles. La profondeur des cavités a été modulée entre 10 et 50 *µ*m en donnant à chaque fois satisfaction quant à l'adhérence du décor 13 par rapport au corps 11. Par conséquent, les cavités peuvent former des rainures courant sur ledit fond dudit au moins un évidement et tout ou partie des rainures peuvent être sécantes.

Bien entendu, on pourrait également imaginer un trou formé grossièrement dans un moule suivi d'une reprise au laser pour obtenir la même précision des gravures. Le but est d'améliorer l'adhérence par augmentation de la surface sans toutefois pénaliser la mouillabilité des matériaux qui doivent remplir chaque évidement.

Dans un premier mode de réalisation, visible en traits doubles à la figure 6, l'étape 24 se poursuit avec l'étape 25 du procédé 21 consistant à former une couche de liaison 15 au niveau du fond dudit au moins un évidement afin d'assurer un meilleur accrochage ou modifier l'apparence esthétique de la future au moins une deuxième céramique 16 formée lors de l'étape 26. Ce premier mode de réalisation concerne le cas où le matériau du décor 13 est formé par ladite au moins une deuxième céramique 16 et, optionnellement, la couche de liaison 15 comme visible à la figure 5.

L'étape 25 peut être réalisée par un dépôt sous forme sèche ou humide devant éventuellement être activé postérieurement à l'aide d'un traitement thermique et/ou d'un séchage. Une telle couche de liaison 15 peut, par exemple, être formée à partir d'un métal, un alliage métallique, un nitrure métallique, un carbure métallique, un zirconate, un titanate et/ou un aluminate. Dans le premier mode de réalisation, à la suite de cette étape 25, le procédé 21 se poursuit avec l'étape 26.

Dans un deuxième mode de réalisation, visible en trait simple à la figure 6, l'étape 24 se poursuit directement avec l'étape 26. Ce deuxième mode de réalisation est préféré et concerne le cas où le matériau du décor 13 est uniquement formé par ladite au moins une deuxième céramique 16.

L'étape 26 consiste à remplir ledit au moins un évidement 12 de ladite au moins une deuxième céramique 16 afin de former ledit décor. Préférentiellement, l'étape 26 consiste à déposer, par projection thermique, ladite au moins une deuxième céramique 16 par-dessus ledit au moins un évidement 12 afin de remplir totalement ledit au moins un évidement 12.

Il existe plusieurs types de projection thermique (connu sous les termes anglais « thermal spraying ») comme, de manière non limitative, à flamme simple, à flamme supersonique ou à plasma d'arc soufflé. Le but de ces procédés est de fusionner un matériau d'appoint puis de le projeter sur la surface cible afin de former une couche épaisse et homogène du matériau d'appoint.

De manière préférée, la projection thermique est du type à plasma (connu sous les termes anglais « plasma spraying ») car elle donne d'excellents résultats pour le dépôt de céramique. Plus précisément, les tests ont donnés entière satisfaction avec une projection thermique qui utilise de l'air sous pression atmosphérique comme milieu de projection pour le dépôt d'une alumine. Plus généralement, il est apparu que la projection thermique peut être réalisée sous air pour les oxydes et sous vide pour les carbures ou les nitrures.

Un déplacement du corps 11, par rapport à la source du dispositif de projection thermique, peut être optionnellement envisagé afin d'améliorer le remplissage dudit au moins un évidement 12.

Préférentiellement selon l'invention, les matériaux d'appoint peuvent être formés à partir d'un carbure, d'un oxyde ou d'un nitrure de matériaux comme le titane, le silicium, l'aluminium ou le zirconium pour former tout ou partie du décor 13. On comprend donc que ces particules peuvent être de la même famille que celle du corps 11 ou non.

Comme expliqué ci-dessus, suivant la teinte ou plus globalement le rendu visuel souhaité, la (ou les) deuxième(s) céramique(s) 16 formée(s) lors de l'étape 26 comporte(nt) de manière préférée une ou plusieurs teintes contrastant avec celle du corps 11.

Enfin, dans une dernière étape 27, le procédé 21 se termine en aplanissant chaque au moins une deuxième céramique 16 afin de n'en laisser que dans le creux de chaque évidement 12. L'élément 10 incrusté est ainsi terminé et n'a, éventuellement, plus qu'à être monté sur une pièce finale. Cette étape 27 peut être obtenue par une méthode de surfaçage habituelle comme un meulage ou un rodage pour enlever le surplus de matière suivi d'un polissage.

Lors d'un des tests, il a été développé une lunette noire en zircone dont les décors 13 forment des indices blancs en alumine qui a donné entière satisfaction par son apparence « céramique » homogène, sa dureté homogène très élevée et son très bon contraste.

Bien entendu, la présente invention ne se limite pas à l'exemple illustré mais est susceptible de diverses variantes et modifications qui apparaîtront à l'homme de l'art. En particulier, l'application de l'élément 10 incrusté selon l'invention ne saurait se limiter à une pièce d'horlogerie 1. Ainsi, l'élément 10 incrusté pourrait, à titre d'exemple, être appliqué à un article de bijouterie ou de joaillerie ou encore aux arts de la table.

De plus, il est envisageable de substituer le gravage par laser de l'étape 23 et/ou le gravage par laser, le sablage ou le gravage chimique de l'étape 24 par un autre type de gravage si sa précision et son taux de rebut est acceptable.

En outre, il est également possible de réaliser des décors comportant plusieurs céramiques imbriquées et/ou adjacentes. Un tel mode de réalisation peut, par exemple, permettre un élément multicolore. Ainsi, une deuxième céramique d'une première couleur peut être elle-même gravée, par exemple par laser, pour y former une troisième céramique d'une deuxième couleur. On peut ainsi obtenir dans le décor lui-même, ou à cheval entre le corps et le décor, deux couleurs en contraste ou une couleur avec un matériau phosphorescent tel que du superluminova®.

On comprend également, dans le cas où au moins un des décors 13 forme tout ou partie d'un palier, que ladite au moins une deuxième céramique 16 peut plus simplement être gravée pour former un coussinet du type crapaudine ou pierre percée.

Enfin, il est également à noter que le corps 11 ne saurait se limiter à un élément céramique mais plus généralement à un élément en matériau dur usinable, c'est-à-dire dont la dureté est égale ou supérieure à 700 HV.

## Revendications

1. Procédé de fabrication (21) d'un élément céramique incrusté (10) d'une pièce d'horlogerie (1) comportant les étapes suivantes :
a) former (22) un corps (11) en céramique ;
b) graver (23) au moins un évidement (12) dans une face (F) du corps (11) en céramique, chaque au moins un évidement formant l'empreinte d'un décor (13) ;
c) modifier (24) l'état de surface du fond dudit au moins un évidement afin d'augmenter sa surface de contact ;
d) déposer (26), par projection thermique, une deuxième céramique (16) par-dessus ledit au moins un évidement afin de remplir totalement ledit au moins un évidement ;
e) aplanir (27) ladite deuxième céramique (16) afin de n'en laisser que dans le creux dudit au moins un évidement.

2. Procédé (21) selon la revendication 1, **caractérisé en ce que** le corps (11) en céramique comporte un carbure, un oxyde ou un nitrure de titane, de silicium, d'aluminium ou de zirconium.

3. Procédé (21) selon la revendication 1 ou 2, **caractérisé en ce que** le corps (11) en céramique est un cermet.

4. Procédé (21) selon l'une des revendications 1 à 3, **caractérisé en ce que** l'étape a) est réalisée par frittage.

5. Procédé (21) selon la revendication 1 ou 2, **caractérisé en ce que** le corps (11) en céramique est un corindon synthétique.

6. Procédé (21) selon l'une des revendications précédentes, **caractérisé en ce que** l'étape b) est réalisée par laser.

7. Procédé (21) selon l'une des revendications précédentes, **caractérisé en ce que** chaque au moins un évidement (12) comporte une profondeur comprise entre 80 *µ*m et 500 *µ*m afin d'améliorer la force d'accrochage.

8. Procédé (21) selon l'une des revendications précédentes, **caractérisé en ce que** l'étape c) est réalisée par laser.

9. Procédé (21) selon l'une des revendications précédentes, **caractérisé en ce que** l'étape c) forme des cavités dans ledit fond dudit au moins un évidement.

10. Procédé (21) selon la revendication précédente, **caractérisé en ce que** les cavités forment des rainures courant sur ledit fond dudit au moins un évidement.

11. Procédé (21) selon la revendication précédente, **caractérisé en ce que** lesdites rainures courant sur ledit fond dudit au moins un évidement sont sécantes.

12. Procédé (21) selon l'une des revendications 9 à 11, **caractérisé en ce que** les cavités ont des profondeurs qui sont inférieures au cinquième de la profondeur dudit au moins un évidement (12).

13. Procédé (21) selon l'une des revendications 1 à 7, **caractérisé en ce que** l'étape c) est réalisée par sablage.

14. Procédé (21) selon l'une des revendications 1 à 7, **caractérisé en ce que** l'étape c) est réalisée par gravage chimique.

15. Procédé (21) selon l'une des revendications précédentes, **caractérisé en ce que** la deuxième céramique comporte un carbure, un oxyde ou un nitrure de titane, de silicium, d'aluminium ou de zirconium.

16. Procédé (21) selon l'une des revendications précédentes, **caractérisé en ce que** la projection thermique est du type à plasma.

17. Procédé (21) selon l'une des revendications précédentes, **caractérisé en ce qu'**il comporte, avant l'étape d), l'étape suivante :
f) former (25) une couche de liaison au niveau du fond dudit au moins un évidement afin d'assurer un meilleur accrochage ou modifier l'apparence esthétique de la deuxième céramique.

18. Procédé (21) selon l'une des revendications précédentes, **caractérisé en ce que** le procédé, après l'étape e), comporte les étapes suivantes :
b')graver au moins un deuxième évidement dans une face de la deuxième céramique ;
c') modifier l'état de surface du fond dudit au moins un deuxième évidement afin d'augmenter sa surface de contact ;
d')déposer, par projection thermique, une troisième céramique par-dessus ledit au moins un deuxième évidement afin de remplir totalement ledit au moins un deuxième évidement ;
e')aplanir ladite troisième céramique afin de n'en laisser que dans le creux dudit au moins un deuxième évidement.

19. Pièce d'horlogerie (1) **caractérisée en ce qu'**elle comporte au moins un élément céramique (10) incrusté par au moins un décor (13) comportant au moins une deuxième céramique (16) obtenu à partir du procédé conforme à l'une des revendications précédentes, le corps (11) en céramique dudit élément formant une pièce (2, 3, 4, 5, 6, 7, 8) de l'habillage de ladite pièce d'horlogerie.

20. Pièce d'horlogerie (1) selon la revendication précédente, **caractérisée en ce que** l'élément céramique forme tout ou partie d'un boîtier (2), d'un bracelet (3), d'une lunette (4), d'un cadran (5), d'une glace (6), d'un poussoir (7), d'une couronne (8), d'une carrure, d'une corne, d'un réhaut, d'un fond de boîtier, d'une aiguille, d'un maillon, d'un fermoir, d'un décor et/ou d'une applique.

21. Pièce d'horlogerie (1) **caractérisée en ce qu'**elle comporte au moins un élément céramique (10) incrusté par au moins un décor (13) comportant au moins une deuxième céramique (16) obtenu à partir du procédé conforme à l'une des revendications 1 à 18, le corps (11) en céramique dudit élément formant une pièce du mouvement de ladite pièce d'horlogerie.

22. Pièce d'horlogerie (1) selon la revendication précédente, **caractérisée en ce que** l'élément céramique forme tout ou partie d'un spiral, d'une cheville, d'un balancier, d'un axe, d'un plateau, d'une ancre, d'une tige, d'une baguette, d'une fourchette, d'une palette, d'un dard, d'un mobile, d'une roue, d'un arbre, d'un pignon, d'un pont, d'une platine, d'une masse oscillante, d'une tige de remontoir, d'un palier ou d'un coussinet.

## Patentansprüche

1. Verfahren zum Herstellen (21) eines mit Einlegearbeiten verzierten Keramikelements (10) eines Zeitmessgeräts (1), umfassend die folgenden Schritte:
a) Bilden (22) eines Keramikkörpers (11);
b) Ätzen (23) mindestens einer Aussparung (12) in eine Fläche (F) des Keramikkörpers (11), wobei jede der mindestens einen Aussparung eine Prägung einer Verzierung (13) bildet;
c) Ändern (24) der Oberflächenbeschaffenheit des Bodens der mindestens einen Aussparung, um seine Kontaktoberfläche zu erhöhen;
d) Ablagern (26) durch thermisches Spritzen einer zweiten Keramik (16) in die mindestens eine Aussparung, um die mindestens eine Aussparung vollständig zu füllen;
e) Einebnen (27) der zweiten Keramik (16), um sie nur in der Aushöhlung der mindestens einen Aussparung zu belassen.

2. Verfahren (21) nach Anspruch 1, **dadurch gekennzeichnet, dass** der Keramikkörper (11) ein Karbid, ein Oxid oder ein Nitrid von Titan, Silicium, Aluminium oder Zirconium enthält.

3. Verfahren (21) nach Anspruch 1 oder 2, **dadurch gekennzeichnet, dass** der Keramikkörper (11) aus einem Cermet ist.

4. Verfahren (21) nach einem der Ansprüche 1 bis 3, **dadurch gekennzeichnet, dass** der Schritt a) durch Sintern ausgeführt wird.

5. Verfahren (21) nach Anspruch 1 oder 2, **dadurch gekennzeichnet, dass** der Keramikkörper (11) aus einem synthetischen Korund ist.

6. Verfahren (21) nach einem der vorhergehenden Ansprüche, **dadurch gekennzeichnet, dass** der Schritt b) durch Lasern ausgeführt wird.

7. Verfahren (21) nach einem der vorhergehenden Ansprüche, **dadurch gekennzeichnet, dass** jede der mindestens einen Aussparung (12) eine Tiefe im Bereich von 80 µm bis 500 µm aufweist, um die Verankerungskraft zu verbessern.

8. Verfahren (21) nach einem der vorhergehenden Ansprüche, **dadurch gekennzeichnet, dass** der Schritt c) durch Lasern ausgeführt wird.

9. Verfahren (21) nach einem der vorhergehenden Ansprüche, **dadurch gekennzeichnet, dass** der Schritt c) im Boden der mindestens einen Aussparung Vertiefungen erzeugt.

10. Verfahren (21) nach dem vorhergehenden Anspruch, **dadurch gekennzeichnet, dass** die Vertiefungen Rillen bilden, die auf dem Boden der mindestens einen Aussparung verlaufen.

11. Verfahren (21) nach dem vorhergehenden Anspruch, **dadurch gekennzeichnet, dass** sich die auf dem Boden der mindestens einen Aussparung verlaufenden Rillen schneiden.

12. Verfahren, (21) nach einem der Ansprüche 9 bis 11, **dadurch gekennzeichnet, dass** die Vertiefungen Tiefen aufweisen, die kleiner als ein Fünftel der Tiefe der mindestens einen Aussparung (12) sind.

13. Verfahren (21) nach einem der Ansprüche 1 bis 7, **dadurch gekennzeichnet, dass** der Schritt c) durch Sandstrahlen ausgeführt wird.

14. Verfahren (21) nach einem der Ansprüche 1 bis 7, **dadurch gekennzeichnet, dass** der Schritt c) durch chemisches Ätzen ausgeführt wird.

15. Verfahren (21) nach einem der vorhergehenden Ansprüche, **dadurch gekennzeichnet, dass** die zweite Keramik ein Karbid, ein Oxid oder ein Nitrid von Titan, Silicium, Aluminium oder Zirconium enthält.

16. Verfahren (21) nach einem der vorhergehenden Ansprüche, **dadurch gekennzeichnet, dass** das thermische Spritzen vom Typ Plasmaspritzen ist.

17. Verfahren (21) nach einem der vorhergehenden Ansprüche, **dadurch gekennzeichnet, dass** es vor dem Schritt d) den folgenden Schritt umfasst:
f) Bilden (25) einer Verbindungsschicht auf Höhe des Bodens der mindestens einen Aussparung, um eine bessere Verankerung sicherzustellen oder um das ästhetische Erscheinungsbild der zweiten Keramik zu verändern.

18. Verfahren (21) nach einem der vorhergehenden Ansprüche, **dadurch gekennzeichnet, dass** das Verfahren nach dem Schritt e) die folgenden Schritte umfasst:
b') Ätzen mindestens einer zweiten Aussparung in eine Fläche der zweiten Keramik;
c') Verändern der Oberflächenbeschaffenheit des Bodens der mindestens einen zweiten Aussparung, um seine Kontaktoberfläche zu erhöhen;
d') Ablagern durch thermisches Spritzen einer dritten Keramik in die mindestens eine zweite Aussparung, um die mindestens eine zweite Aussparung vollständig zu füllen;
e') Einebnen der dritten Keramik, um sie nur in der Aushöhlung der mindestens einen zweiten Aussparung zu belassen.

19. Zeitmessgerät (1), **dadurch gekennzeichnet, dass** es mindestens ein Keramikelement (10) umfasst, das durch mindestens eine Verzierung (13) mit Einlegearbeiten verziert ist, die mindestens eine zweite mit dem Verfahren nach einem der vorhergehenden Ansprüche gewonnene Keramik (16) aufweist, wobei der Keramikkörper (11) des Elements ein Verkleidungsteil (2, 3, 4, 5, 6, 7, 8) des Zeitmessgeräts bildet.

20. Zeitmessgerät (1) nach dem vorhergehenden Anspruch, **dadurch gekennzeichnet, dass** das Keramikelement ganz oder teilweise ein Gehäuse (2), ein Armband (3), eine Lünette (4), ein Zifferblatt (5), ein Glas (6), einen Drücker (7), eine Krone (8), ein Gehäusemittelteil, ein Horn, einen Höhenring, einen Gehäuseboden, einen Zeiger, ein Kettenglied, eine Schließe, eine Verzierung und/oder eine Applike bildet.

21. Zeitmessgerät (1), **dadurch gekennzeichnet, dass** es mindestens ein Keramikelement (10) umfasst, in das mindestens eine Verzierung (13) eingelegt ist, die mindestens eine zweite durch das Verfahren nach einem der Ansprüche 1 bis 18 gewonnene Keramik (16) enthält, wobei der Keramikkörper (11) des Elements ein Teil des Uhrwerks des Zeitmessgeräts bildet.

22. Zeitmessgerät (1) nach dem vorhergehenden Anspruch, **dadurch gekennzeichnet, dass** das Keramikelement ganz oder teilweise eine Spiralfeder, einen Hebelstein, eine Unruh, eine Achse, eine Hebelscheibe, einen Anker, einen Stift, eine Stange, eine Gabel, eine Palette, einen Sicherheitsstift, ein Drehteil, ein Rad, eine Welle, ein Ritzel, eine Brücke, eine Platine, eine Schwingmasse, einen Aufzugstift, ein Lager oder eine Lagerhülse bildet.

## Claims

1. Method (21) of manufacturing an inlaid ceramic element (10) for a timepiece (1) comprising the following steps:
a) forming (22) a ceramic body (11);
b) etching (23) at least one recess (12) in one face (F) of the ceramic body (11), each at least one recess forming the pattern cavity for a decoration (13);
c) changing (24) the surface state of the bottom of said at least one recess in order to increase the contact surface thereof;
d) depositing (26), by thermal spraying, a second ceramic material (16) over said at least one recess in order to totally fill said at least one recess;
e) flattening (27) said second ceramic material (16) so that said second ceramic material remains only in the hollow of said at least one recess.

2. Method (21) according to claim 1, **characterized in that** the ceramic body (11) includes a carbide, an oxide or a nitride of titanium, silicon, aluminium or zirconium.

3. Method (21) according to claim 1 or 2, **characterized in that** the ceramic body (11) is a cermet.

4. Method (21) according to any of claims 1 to 3, **characterized in that** step a) is achieved by sintering.

5. Method (21) according to claim 1 or 2, **characterized in that** the ceramic body (11) is a synthetic corundum.

6. Method (21) according to any of the preceding claims, **characterized in that** step b) is performed by laser.

7. Method (21) according to any of the preceding claims, **characterized in that** each at least one recess (12) has a depth comprised between 80 *µ*m and 500 *µ*m in order to improve the force of adherence.

8. Method (21) according to any of the preceding claims, **characterized in that** step c) is performed by laser.

9. Method (21) according to any of the preceding claims, **characterized in that** step c) forms cavities in said bottom of said at least one recess.

10. Method (21) according to the preceding claim, **characterized in that** the cavities form grooves running over said bottom of said at least one recess.

11. Method (21) according to the preceding claim, **characterized in that** said grooves running over said bottom of said at least one recess are secant.

12. Method (21) according to any of claims 9 to 11, **characterized in that** the cavities have depths which are less than one fifth of the depth of said at least one recess (12).

13. Method (21) according to any of claims 1 to 7, **characterized in that** step c) is performed by sandblasting.

14. Method (21) according to any of claims 1 to 7, **characterized in that** step c) is performed by chemical etching.

15. Method (21) according to any of the preceding claims, **characterized in that** the second ceramic material includes a carbide, an oxide or a nitride of titanium, silicon, aluminium or zirconium.

16. Method (21) according to any of the preceding claims, **characterized in that** the thermal spraying is of the plasma type.

17. Method (21) according to any of the preceding claims, **characterized in that** prior to step d), the method includes the following step:
f) forming (25) a connecting layer on the bottom of said at least one recess in order to achieve improved adherence or to change the aesthetic appearance of the second ceramic material.

18. Method (21) according to any of the preceding claims, **characterized in that**, after step e), the method includes the following steps:
b') etching at least a second recess in one face of the second ceramic material;
c') changing the surface state of the bottom of said at least one second recess in order to increase the contact surface thereof;
d') depositing, by thermal spraying, a third ceramic material over said at least one second recess in order to totally fill said at least one second recess;
e')flattening said third ceramic material so that said third ceramic material remains only in the hollow of said at least one second recess.

19. Timepiece (1) **characterized in that** the timepiece includes at least one ceramic element (10) inlaid with at least one decoration (13) including at least a second ceramic material (16) obtained by the method according to any of the preceding claims, the ceramic body (11) of said element forming an external part (2, 3, 4, 5, 6, 7, 8) of said timepiece.

20. Timepiece (1) according to the preceding claim, **characterized in that** the ceramic element forms all or part of a case (2), a bracelet or wristband (3), a bezel (4), a dial (5), a crystal (6), a push-piece (7), a crown (8), a case middle, a horn, a flange, a case back cover, a hand, a link, a clasp, a decoration and/or an applique.

21. Timepiece (1) **characterized in that** the timepiece includes at least one ceramic element (10) inlaid with at least one decoration (13) including at least a second ceramic material (16) obtained by the method according to any of claims 1 to 18, the ceramic body (11) of said element forming a part of the movement of said timepiece.

22. Timepiece (1) according to the preceding claim, **characterized in that** the ceramic element forms all or part of a balance spring, an impulse pin, a balance, a staff, a roller, pallets, a pin, a pallet-lever, a fork, a pallet-stone, a dart, a wheel set, a wheel, an arbor, a pinion, a bridge, a main plate, an oscillating weight, a winding stem, a bearing or a bearing-block.
